(19) Europäisches Patentamt
European Patent Office
Office européen des brevets

(11) **EP 1 554 905 B1**

(12) **EUROPÄISCHE PATENTSCHRIFT**

(45) Veröffentlichungstag und Bekanntmachung des Hinweises auf die Patenterteilung:
**14.06.2006 Patentblatt 2006/24**

(51) Int Cl.:
**H04Q 7/36** (2006.01)

(21) Anmeldenummer: **03788970.6**

(22) Anmeldetag: **23.10.2003**

(86) Internationale Anmeldenummer:
**PCT/EP2003/011898**

(87) Internationale Veröffentlichungsnummer:
**WO 2004/039114 (06.05.2004 Gazette 2004/19)**

(54) **VERFAHREN ZUR VERWALTUNG VON FUNKRESSOURCEN**

METHOD FOR RADIO SYSTEM RESOURCE MANAGEMENT

PROCEDE DE GESTION DE RESSOURCES RADIO

(84) Benannte Vertragsstaaten:
**AT BE BG CH CY CZ DE DK EE ES FI FR GB GR HU IE IT LI LU MC NL PT RO SE SI SK TR**

(30) Priorität: **24.10.2002 EP 02023913**

(43) Veröffentlichungstag der Anmeldung:
**20.07.2005 Patentblatt 2005/29**

(73) Patentinhaber: **SIEMENS AKTIENGESELLSCHAFT
80333 München (DE)**

(72) Erfinder:
- **HAAS, Harald
  28759 Bremen (DE)**
- **COSTA, Elena
  85748 Garching (DE)**
- **LOTT, Matthias
  82061 Neuried (DE)**
- **SCHULZ, Egon
  80993 München (DE)**

(56) Entgegenhaltungen:
EP-A- 1 178 641          WO-A- 02/49385
US-A- 5 257 398          US-A- 5 956 642

- KIM W S ET AL: "Enhanced capacity in CDMA systems with alternate frequency planning" COMMUNICATIONS, 1998. ICC 98. CONFERENCE RECORD. 1998 IEEE INTERNATIONAL CONFERENCE ON ATLANTA, GA, USA 7-11 JUNE 1998, NEW YORK, NY, USA,IEEE, US, 7. Juni 1998 (1998-06-07), Seiten 973-978, XP010284782 ISBN: 0-7803-4788-9
- SUZUKI M ET AL: "FREQUENCY RE-USING PATTERN FOR FORWARD LINK OF ORTHOGONAL CDMA CELLULAR SYSTEMS" IEICE TRANSACTIONS ON COMMUNICATIONS, INSTITUTE OF ELECTRONICS INFORMATION AND COMM. ENG. TOKYO, JP, Bd. E77-B, Nr. 6, 1. Juni 1994 (1994-06-01), Seiten 838-842, XP000466583 ISSN: 0916-8516
- WANG ZHAOCHENG ET AL: "Frequency reuse scheme for cellular OFDM systems" ELECTRONICS LETTERS, IEE STEVENAGE, GB, Bd. 38, Nr. 8, 11. April 2002 (2002-04-11), Seiten 387-388, XP006018189 ISSN: 0013-5194

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Verwaltung von Funkressourcen in einem zellularen als Mehrträgersystem ausgestalteten Funkkommunikationssystem nach dem Oberbegriff des Anspruchs 1.

Ferner betrifft die Erfindung ein Funkkommunikationssystem mit zellularem Aufbau nach dem Oberbegriff des Anspruchs 13 und eine Steuereinrichtung für ein Funkkommunikationssystem nach dem Oberbegriff des Anspruchs 14.

In Funkkommunikationssystemen werden Informationen (beispielsweise Sprache, Bildinformation, Videoinformation, SMS (Short Message Service) oder andere Daten) mit Hilfe von elektromagnetischen Wellen über eine Funkschnittstelle zwischen sendender und empfangender Station übertragen. Das Abstrahlen der elektromagnetischen Wellen erfolgt dabei mit Trägerfrequenzen, die in dem für das jeweilige System vorgesehenen Frequenzband liegen. Ein Funkkommunikationssystem umfasst hierbei Teilnehmerstationen, z.B. Mobilstationen, Basisstationen, z.B. Node B's, sowie weitere netzseitige Einrichtungen. Die Teilnehmerstationen und die Basisstationen sind in einem Funkkommunikationssystem über eine Funkschnittstelle miteinander verbunden.

Der Zugriff von Stationen auf das gemeinsame Übertragungsmedium wird bei diesen Funkkommunikationssystemen durch Vielfachzugriffsverfahren/Multiplexverfahren (Multiple Access, MA) geregelt. Bei diesen Vielfachzugriffen kann das Übertragungsmedium im Zeitbereich (Time Division Multiple Access, TDMA), im Frequenzbereich (Frequency Division Multiple Access, FDMA), im Codebereich (Code Division Multiple Access, CDMA) oder im Raumbereich (Space Division Multiple Access, SDMA) zwischen den Stationen aufgeteilt werden. Dabei findet häufig (zum Beispiel bei GSM, TETRA (Terrestrial Trunked Radio), DECT (Digital European Cordless Telephone), UMTS) eine Unterteilung des Übertragungsmediums in Frequenz- und/oder Zeitkanäle entsprechend der Funkschnittstelle statt. Auch Kombinationen mehrerer dieser Verfahren werden angewendet. Um einen sparsamen Umgang mit den knappen Funkressourcen zu ermöglichen, befinden sich in Funkkommunikationssystemen Einrichtungen, wie z.B. Steuereinrichtungen, welche die Funkressourcen verwalten bzw. eine Ressourcenzuteilung vornehmen. Die Ressource einer Funkschnittstelle kann hierbei zum Beispiel ein Zeitschlitz-Frequenz-Paar oder auch nur eines von beiden (Zeitschlitz oder Frequenz) sein.

Augrund der steigenden Datenraten speziell im Mobilfunk nimmt die erforderliche Bandbreite stetig zu. Um eine möglichst effiziente Übertragung von Informationen zu gewährleisten, zerlegt man das gesamte zur Verfügung stehende Frequenzband in mehrere Sub-Träger (Mehrträgerverfahren). Die den Mehrträgersystemen, auch als OFDM (Orthogonal Frequency Division Multiplexing) bezeichnet, zugrunde liegende Idee ist es, das Ausgangsproblem der Übertragung eines breitbandigen Signals in die Übertragung einer Menge von schmalbandigen orthogonalen Signalen zu überführen. Dies hat außerdem den Vorteil, dass die am Empfänger erforderliche Komplexität reduziert werden kann.

Bei OFDM werden für die Sub-Träger annähernd rechteckige Pulsformen verwendet. Der Frequenzabstand der Sub-Träger wird derart gewählt, dass bei derjenigen Frequenz, bei welcher das Signal eines Sub-Trägers ausgewertet wird, die Signale der anderen Sub-Träger einen Nulldurchgang aufweisen. Somit sind die Sub-Träger orthogonal zueinander. Eine spektrale Überlappung der Sub-Träger und daraus resultierend eine hohe Packungsdichte der Sub-Träger ist erlaubt, da die Orthogonalität eine Unterscheidbarkeit der einzelnen Sub-Träger sicherstellt. Daher wird eine bessere Spektraleffizienz als bei dem einfachen FDM (Frequency Division Multiplexing) erreicht. Den kleinsten geographischen Funkversorgungsbereich eines zellularen Funkkommunikationssystems nennt man Funkzelle. Dieser Bereich wird von einer Basisstation aus bedient. Die Form der Funkzelle wird dabei so optimiert, dass sich daraus eine periodisch wiederkehrende Struktur ergibt. Erfolgt während einer aktiven Verbindung zwischen einer Teilnehmerstation und einer Basisstation die Übergabe an eine andere Basisstation, so wird dies als Handover bezeichnet. Die Durchführung eines sogenannten "seamless Handover" hat zur Folge, dass eine Kommunikation unterbrechungsfrei weitergeführt werden kann, wenn z.B. die Teilnehmerstation sich von einer Funkzelle in eine benachbarte Funkzelle bewegt. Die Übergabeprozedur kann sowohl von der Basisstation als auch von der Teilnehmerstation aus erfolgen. Ausgelöst wird ein Handover z.B. dann, wenn die von der Teilnehmerstation empfangene Signalamplitude eine einwandfreie Übertragung nicht mehr sicherstellt, oder wenn das Signal einer anderen Basisstation mit größerer Amplitude empfangen wird als dasjenige der aktuell mit der Teilnehmerstation über die Funkschnittstelle verbundenen Basisstation. Hierbei wird ein Schwellwert miteinbezogen, um Instabilitäten, wie z.B. den Ping-Pong-Effekt, zu vermeiden.

Bei zellularen Funkkommunikationssystemen existiert zur optimalen Ausnutzung der Funkfrequenzen ein Funkzellenkonzept in Form eines Wabenplans, bei dem die Funkfrequenzen bzw. das Frequenzband in anderen Zellen wiederverwendet wird. Dies wird durch den Frequenzwiederholfaktor (frequency reuse factor) ausgedrückt. Bei Einhaltung einer gewissen Schutzentfernung vor der Wiederverwendung einer Frequenz liegt ein Frequenzwiederholfaktor, welcher größer als eins ist, vor. Ein Frequenzwiederholfaktor von eins entspricht dem Fall, dass jede Zelle das gleiche Frequenzband nutzt.

Das Dokument WO 02/49385 A2 beschreibt ein OFDM-System mit einem Frequenzwiederholabstand von 1. Die Zellen können in Sektoren eingeteilt werden, wobei jeder Sektor ein OFDMA-Cluster verwendet, so dass der Frequenzwiederholabstand zwischen den Clustern 2 beträgt.

Das Dokument "W.S. Kim, V.K. Prabhu: Enhanced Capacity in CDMA Systems with Alternate Frequency Planning, Communications 1998. ICC 98, Conference Record, 1998 IEEE International Conference on Atlanta, GA, USA 7-11 June 1998, Seiten 973-978, ISBN: 0-7803-47788-9, XP010284782" stellt verschiedene Frequenz-Planungs-Schemata für CDMA-Systeme vor. Möglich ist demgemäß ein Frequenzwiederholabstand von 1, oder ein Frequenzwiederholabstand von 3, oder die Aufteilung der Zellen in Bereiche, so dass verschiedene Bereiche der Zellen verschiedene Teile des Frequenzbandes verwenden.

In existierenden Mobilfunksystemen der zweiten Generation mit Frequenzwiederholfaktoren größer eins wechselt eine Teilnehmerstation die Trägerfrequenz, um die Amplituden der Funksignale einer anderen, benachbarten Basisstation zu messen. Ist die aktuell empfangene Amplitude derjenigen Basisstation, mit der die Teilnehmerstation kommuniziert, um eine vorgegebene Schwelle geringer als die gemessene Amplitude einer Nachbarstation, so wird ein Wechsel zu einer anderen Basisstation (Handover) veranlasst. In derartigen Systemen muss somit die Teilnehmerstation alle empfangenen Amplituden der Nachbarbasisstationen messen, indem sie die entsprechende Frequenz wählt und während der Messprozedur die Verbindung zu der versorgenden Basisstation unterbricht. Dies geschieht in der Regel in den Zeiten, in denen keine Kommunikation zwischen der Teilnehmerstation und der jeweiligen Basisstation stattfindet, also während sogenanhter Idle-Perioden, so dass eine Basisstation von der Messung einer Teilnehmerstation nichts erfährt. Alternativ kann eine Teilnehmerstation sich bei der Basisstation für diese Zwecke abmelden, wie z.B. bei HIPERLAN/2 vorgesehen. Die Messungen durch die Teilnehmerstation auf anderen Frequenzen erfordert Zeit und Signalisierungsressourcen.

Im UMTS (Universal Mobile Telecommunications System) wird der Mechanismus des Soft-Handover mit Macro-Diversität verwendet. Dieser zeichnet sich dadurch aus, dass dasselbe Informationssignal zeitweilig von mehreren Basisstationen gleichzeitig, jedoch mit unterschiedlichen Spreizfaktoren, gesendet wird. Die Teilnehmerstation empfängt, decodiert und kombiniert alle Signale und ist dadurch in der Lage, die Empfangsgüte zu erhöhen. Der Nachteil an diesem Verfahren ist, dass für die gleiche Information mehrere Ressourcen eingesetzt werden.

In der Regel kann davon ausgegangen werden, dass sich die Anzahl der Frequenzbänder pro Betreiber in OFDM Systemen auf ein einziges Frequenzband beschränkt. Daher besteht das Bestreben, das zur Verfügung stehende Frequenzband effektiv einzusetzen. Da dem Betreiber nur ein einziges Frequenzband zur Verfügung steht, liegt ein Frequenzwiederholfaktor von eins vor. Zur Reduzierung der Interferenz und des Signalisierungsaufkommens werden effiziente Handover Mechanismen benötigt.

Aufgabe der Erfindung ist es, ein effektives Verfahren der eingangs genannten Art zur Verwaltung von Funkressourcen und ein entsprechendes Funkkommunikationssystem und eine Steuereinrichtung der eingangs genannten Art aufzuzeigen.

Diese Aufgabe wird hinsichtlich des Verfahrens durch ein verfahren mit den Merkmalen des Anspruchs 1 gelöst.

Ausgestaltungen und Weiterbildungen sind Gegenstand der Unteransprüche.

Erfindungsgemäß stehen zeitweilig die Sub-Träger des mindestens einen Frequenzbandes jeder Funkzelle zur Übertragung von Informationen zur Verfügung, und zeitweilig wird die Mehrzahl von Sub-Trägern des mindestens einen Frequenzbandes einer Anzahl von Funkzellen derartig zugeteilt, dass jeder der zugeteilten Sub-Träger einer Teilmenge aus der Anzahl von Funkzellen zur Übertragung von Informationen zur Verfügung steht.

Die Anzahl von Funkzellen besteht hierbei aus mindestens zwei Funkzellen. Eine Teilmenge aus dieser Anzahl muss weniger Funkzellen beinhalten als die Anzahl an sich.

Ein Vorteil dieses Verfahrens ist darin zu sehen, dass grundsätzlich ein Frequenzwiederholfaktor von eins verwendet werden kann. Für manche Kanäle, wie z.B. bestimmte Broadcast Kanäle, ist es jedoch ressourcensparend, wenn Sub-Bänder nicht von allen Basisstationen verwendet werden dürfen. Die Erfindung erlaubt es, die intensive Ausnutzung von Ressourcen bei einem Frequenzwiederholfaktor von eins in Verbindung mit einer Aufteilung der Ressourcen an die Basisstationen für bestimmte Zwecke einzusetzen.

In einer Weiterbildung der Erfindung steht mindestens einer der zugeteilten Sub-Träger genau einer Funkzelle aus der Anzahl der Funkzellen zur Verfügung. Es ist auch möglich, dass jeder der zugeteilten Sub-Träger genau einer Funkzelle aus der Anzahl von Funkzellen zur Verfügung steht. Insgesamt kann also bei der Zuteilung jeder Sub-Träger einem oder mehreren Funkzellen aus der Anzahl von Funkzellen zur Verfügung stehen, jedoch nicht allen Funkzellen. Verschiedenen Sub-Trägern können gleichzeitig verschiedene und verschieden viele Funkzellen zugeteilt werden.

Vorteilhafterweise besteht die Anzahl von Funkzellen aus benachbarten Funkzellen. Funkzellen sind benachbart, wenn sie eine gemeinsame Grenze aufweisen. In einem Netz aus hexagonalen Funkzellen hat also jede Funkzelle sechs Nachbarfunkzellen. Die Anzahl von Funkzellen besteht in einem derartigen Netz vorzugsweise aus sieben Funkzellen. Es ist jedoch auch jede andere Anzahl an Funkzellen möglich.

Mit Vorteil können bei einer Zuteilung der Sub-Träger an n Funkzellen mindestens einer Funkzelle zur Verfügung stehende Sub-Träger einen Frequenzabstand von n Sub-Trägern aufweisen. Beläuft sich beispielsweise die Anzahl an Funkzellen auf sieben Funkzellen, so kann der ersten Funkzelle der erste Sub-Träger, der achte Sub-Träger, der fünfzehnte Sub-Träger, usw. zugeteilt werden. Der jeweiligen Funkzelle wird also jeweils der n-te Sub-Träger zugeteilt. Es ist möglich, dass einer Funkzelle neben der beschriebenen Aufteilung der Sub-Träger weitere Subträger zur Verfügung stehen, so dass nicht alle Sub-Träger einen Frequenzabstand von n Sub-Trägern aufweisen. So können einer Funkzelle z.B. der erste und der zweite, der achte und der neunte, der fünfzehnte und der sechzehnte Sub-Träger usw. zugeteilt werden.

In einer Ausführungsform der Erfindung sind bei der Zuteilung der Sub-Träger mindestens einer Funkzelle zur Verfügung stehende Sub-Träger im Frequenzband benachbarte Sub-Träger. Beispielsweise können der ersten Funkzelle aus der Anzahl von Funkzellen die Sub-Träger eins und zwei, der zweiten Funkzelle die Sub-Träger drei und vier, usw. zugeteilt werden, wobei die Nummerierung der Sub-Träger mit steigender Frequenz erfolgt. Auch eine Kombination zwischen einer Zuteilung von benachbarten Sub-Trägern und Sub-Trägern mit Frequenzabstand ist möglich.

In Weiterbildung der Erfindung erfolgt die Zuteilung der Sub-Träger nach einem Algorithmus. Hierbei kann eine beliebige Rechenvorschrift, welche die Mehrzahl von Subträgern auf die Anzahl von Funkzellen abbildet, wobei jedem Subträger nur eine Teilmenge der Anzahl zugeteilt werden darf, eingesetzt werden. Ein Beispiel für einen Algorithmus ist die Zuteilung der Sub-Träger gemäß Codes. So kann bei einem Vorhandensein von 4 Sub-Trägern beispielsweise der Code 1,0,1,0 bedeuten, dass der jeweiligen Funkzelle der erste und der dritte Sub-Träger zugewiesen wird. Ein solches Vorgehen kann im Rahmen eines MC-CDMA (Multi Carrier Code Division Multiple Access) Verfahrens zum Einsatz kommen.

Vorzugsweise werden die zugeteilten Sub-Träger von den Basisstationen der jeweiligen Funkzellen zur Übertragung von Broadcast Informationen verwendet. Mit Vorteil können die Broadcast Informationen zur Entscheidung über Handover herangezogen werden. Eine Handover Entscheidung erfolgt in der Regel in Abhängigkeit von einem oder mehreren Messwerten. Darunter fallen z.B. Messwerte der Intensitäten der von den Basisstationen ausgestrahlten Broadcast Kanäle. Je nach Messergebnis kann dann eine Entscheidung getroffen werden, ob ein Handover durchzuführen ist oder nicht. Im Fall, dass die Handover Entscheidung positiv ausfällt, kann entschieden werden, zu welcher Zelle der Handover durchgeführt werden soll.

In einer Weiterbildung der Erfindung werden in die Broadcast Informationen empfangenden Teilnehmerstationen die Amplituden der Broadcast Informationen bestimmt. Vorzugsweise wird eine Metrik der Amplituden der von einer Basisstation auf den ihr zur Verfügung stehenden Sub-Trägern übertragenen Broadcast Informationen ermittelt. Eine Metrik kann z.B. ein Mittelwert sein. Die Ermittlung der Metrik kann sowohl in der Teilnehmerstation als auch in einer Basisstation oder einer anderen netzseitigen Einrichtung ermittelt werden. Wird die Bestimmung nicht in der Teilnehmerstation durchgeführt, so bedarf es einer Übermittlung der Messergebnisse der Amplituden von der Teilnehmerstation an das Netz.

Das Verfahren kann vorzugsweise auf ein OFDM System angewandt werden.

Im Hinblick auf das Funkkommunikationssystem mit zellularem Aufbau wird die oben genannte Aufgabe durch ein Funkkommunikationssystem mit den Merkmalen des Anspruchs 13 gelöst.

Das Funkkommunikationssystem mit zellularem Aufbau umfasst mindestens eine netzseitige Steuereinrichtung. Erfindungsgemäß weist die mindestens eine netzseitige Steuereinrichtung

- Mittel zum zeitweiligen derartigen Zuteilen der Mehrzahl von Sub-Trägern des mindestens einen Frequenzbandes an die Funkzellen, dass die Sub-Träger jeder Funkzelle zur Übertragung von Informationen zur Verfügung stehen, und
- Mittel zum zeitweiligen derartigen Zuteilen der Mehrzahl von Sub-Trägern des mindestens einen Frequenzbandes unter eine Anzahl von Funkzellen, dass jeder der zugeteilten Sub-Träger einer Teilmenge aus der Anzahl von Funkzellen zur Übertragung von Informationen zur Verfügung steht,

auf.

Im Hinblick auf die Steuereinrichtung für ein Funkkommunikationssystem mit zellularem Aufbau wird die oben genannte Aufgabe durch eine Steuereinrichtung mit den Merkmalen des Anspruchs 14 gelöst.

Erfindungsgemäß weist die Steuereinrichtung

- Mittel zum zeitweiligen derartigen Zuteilen der Mehrzahl von Sub-Trägern des mindestens einen Frequenzbandes an die Funkzellen, dass die Sub-Träger jeder Funkzelle zur Übertragung von Informationen zur Verfügung stehen, und
- Mittel zum ztweiligen derartige Zuteilen der Mehrzahl von Sub-Trägern des mindestens einen Frequenzbandes unter eine Anzahl von Funkzellen, dass jeder der zugeteilten Sub-Träger einer Teilmenge aus der Anzahl von Funkzellen zur Übertragung von Informationen zur Verfügung steht,

auf.

Mittel und Einrichtungen zur Durchführung der Verfahrensschritte gemäß der Erfindung nach Anspruch 1 und den Ausgestaltungen und Weiterbildungen der Erfindung können im erfindungsgemäßen Funkkommunikationssystem und/oder in der erfindungsgemäßen Steuereinrichtung vorgesehen sein.

Einzelheiten und Details der Erfindung werden anhand eines Ausführungsbeispiels erläutert. Dabei zeigen

Figur 1: schematisch einen Ausschnitt eines zellularen Funkkommunikationssystems,

Figur 2: einen erfindungsgemäßen OFDM Rahmen,

Figur 3: von Basisstationen gesendete Signalamplituden, und

Figur 4: von einer Teilnehmerstation empfangene Signalamplituden.

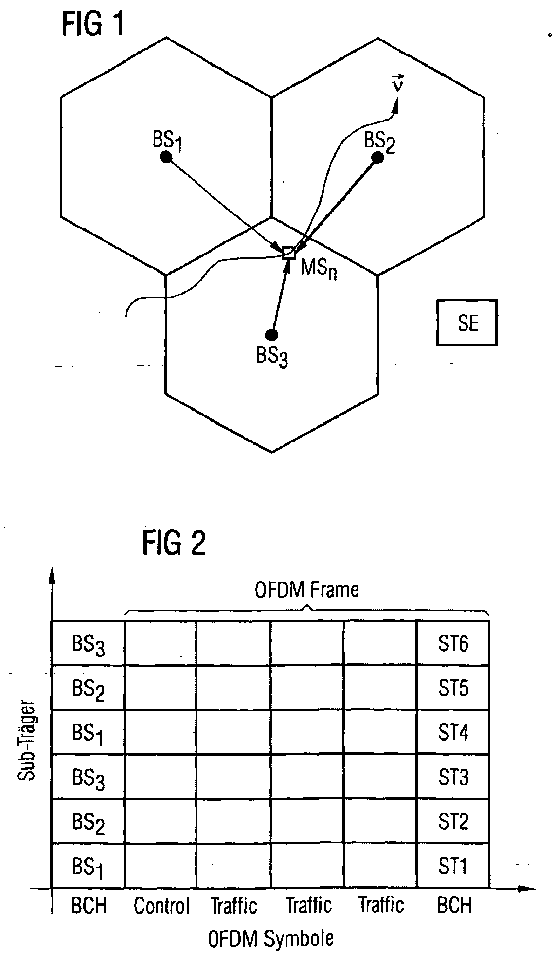

Das folgende Ausführungsbeispiel behandelt ein zellulares OFDM Funkkommunikationssystem, welches zeit- und frequenzsynchronisiert ist. Dabei wird ein Frequenzband mit einem Frequenzwiederholfaktor von eins eingesetzt. Figur 1 zeigt schematisch einen Ausschnitt eines solchen zellularen Systems anhand von drei hexagonalen Funkzellen. Eine Teilnehmerstation $MS_n$ bewegt sich entlang einer Bahn $\vec{v}$ . An ihrem aktuellen Aufenthaltsort empfängt sie Signale von einer ersten Basisstation $BS_1$, von einer zweiten Basisstation $BS_2$, sowie von einer dritten Basisstation $BS_3$. Die Teilnehmerstation $MS_n$ ist aktuell entsprechend ihrem Aufenthaltsort mit der dritten Basisstation $BS_3$ verbunden. Die unterschiedlich dick eingezeichneten Pfeile kennzeichnen dabei die empfangene Amplitude der von der jeweiligen Basisstation $BS_1$, $BS_2$ und $BS_3$ stammenden Signale. Es ist zu erkennen, dass, obwohl sich die Teilnehmerstation $MS_n$ in der Zelle der dritten Basisstation $BS_3$ befindet, die empfangene Amplitude der von der zweiten Basisstation $BS_2$ gesendeten Signale am größten ist. Dieser Effekt kann z.B. durch Abschattungen und Mehrwegeausbreitung entstehen. Unter den in Figur 1 dargestellten Umständen ist es am günstigsten, wenn ein Handover von der dritten Basisstation $BS_3$ zu der zweiten Basisstation $BS_2$ durchgeführt wird.

Eine Steuereinrichtung SE ist Teil des Funkkommunikationssystems. Sie ist -in Figur 1 nicht dargestellt- mit den Basisstationen $BS_1$, $BS_2$ und $BS_3$ direkt oder indirekt, d.h. über andere Stationen, verbunden. Sie kann auch eine Verbindung zum nicht dargestellten Kernnetz aufweisen. Die räumliche Position der Steuereinrichtung SE innerhalb des Funkkommunikationssystems ist beliebig. Sie kann auch in andere netzseitige Einrichtungen integriert sein. Die Aufgabe dieser Steuereinrichtung SE besteht darin, die Funkressourcen den verschiedenen Funkzellen zuzuteilen. Sie trifft also die Entscheidungen, welche Sub-Träger jeder einzelnen Basisstation $BS_1$, $BS_2$ und $BS_3$ oder auch nur einem Teil der Basisstationen zur Verfügung stehen. Diese Entscheidungen werden dann den Basisstationen übermittelt.

In Figur 2 ist ein OFDM Rahmen OFDM Frame dargestellt. Auf der horizontalen Achse, welche der Zeitachse entspricht, sind die OFDM Symbole dargestellt. Die einzelnen OFDM Symbole eines Rahmens OFDM Frame können verschiedenen Funktionen zugeordnet werden. Gezeigt ist die Verwendung eines Symbols für Signalisierungsinformationen Control, die Verwendung dreier Symbole für Nutzinformationen Traffic (d.h. Verkehr), sowie die Verwendung eines Symbols für den Broadcast BCH der jeweiligen Basisstation. Es sind jedoch auch andere Verwendungen der Symbole möglich. Die OFDM Symbole werden nacheinander ausgestrahlt. So zeigt Figur 2 vor dem Beginn des OFDM Rahmens OFDM Frame, innerhalb welchem das erste Symbol für Nutzinformationen Traffic eingesetzt wird, ein OFDM Symbol des vorhergehenden OFDM Rahmens, welches für den Broadcast BCH verwendet wird.

Ein OFDM Symbol besteht aus mehreren Sub-Trägern ST1, ST2, ST3, ST4, ST5 und ST6, welche auf der vertikalen Achse der Figur 2 dargestellt sind. Beispielhaft sind sechs Sub-Träger abgebildet. Im rechten der beiden für den Broadcast BCH verwendeten Symbole ist die Benennung der sechs Sub-Träger ST1, ST2, ST3, ST4, ST5 und ST6 eingetragen.

Die Broadcast Informationen werden von den Basisstationen ausgestrahlt, um mit Hilfe von Messungen der von den Teilnehmerstationen empfangenen Amplituden Handover Entscheidungen treffen zu können. Dabei wird also eine Schätzung der Kanalgüte der verschiedenen Basisstationen, welche sich in der Umgebung der Teilnehmerstation befinden, durchgeführt. Hierzu muss bekannt sein, von welcher Basisstation das empfangene Broadcast Signal stammt. Eine mögliche Lösung dieses Problems liegt darin, für jede Basisstation ein eigenes OFDM Symbol zur Broadcast Übertragung vorzusehen. Dies entspricht in Bezug auf den Zeitablauf einem Nacheinander-Senden der Broadcast Signale der verschiedenen Basisstationen. Daher muss die Zeitdauer von einigen OFDM Symbolen verstreichen, bis die gesamte für einen Handover benötigte Information gesendet und verarbeitet werden kann. Überdies werden die knappen Funkressourcen während dieser Broadcast Symbole ausschließlich für Signalisierungsinformationen und nicht für Nutzinformationen eingesetzt.

Erfindungsgemäß verwenden benachbarte Basisstationen dasselbe OFDM Symbol zur Versendung ihrer Broadcast Informationen. Hierzu werden die Sub-Träger ST1, ST2, ST3, ST4, ST5 und ST6 dieses Symbols diesen Basisstationen zugeteilt. Im vereinfachten Beispiel mit drei Funkzellen gemäß Figur 1 sendet z.B. die erste Basisstation $BS_1$ im ersten Sub-Träger ST1, die zweite Basisstation $BS_2$ im zweiten Sub-Träger ST2, die dritte Basisstation $BS_3$ im dritten Sub-Träger ST3, und weiterhin die erste Basisstation $BS_1$ wieder im vierten Sub-Träger ST4, die zweite Basisstation $BS_2$ wieder im fünften Sub-Träger ST5, usw. Jede Basisstation sendet also auf jedem dritten Sub-Träger. Im linken der beiden in Figur 2 dargestellten für den Broadcast BCH verwendeten OFDM Symbole sind in den Sub-Trägern ST1, ST2, ST3, ST4, ST5 und ST6 die ihnen zugeteilten Basisstationen $BS_1$, $BS_2$ und $BS_3$ eingetragen. Für die Teilnehmerstation ergibt sich dann ein lückenloses OFDM Symbol. Dieses Schema lässt sich leicht auf mehrere Zellen anwenden. Durch die verzahnte Anordnung gewinnt die Teilnehmerstation aus nur einem OFDM Symbol Informationen über die empfangene Amplitude der Funkkanäle benachbarter Basisstationen.

Innerhalb des Netzes, welches durch die Funkzellen gebildet wird, werden Cluster an Nachbarzellen zusammengefasst, welchen dann die Sub-Träger ST1, ST2, ST3, ST4, ST5 und ST6 zugeteilt werden. Dieses Cluster wiederholt sich dann periodisch im Netz der Funkzellen. Vorteilhafterweise findet die Zuteilung der Sub-Träger ST1, ST2, ST3, ST4, ST5 und ST6 in jedem Cluster auf die gleiche Weise statt. Es ist jedoch auch möglich, in verschiedenen Clustern verschiedene Zuteilungsschemata anzuwenden.

Die beschriebene Art der Zuteilung der Sub-Träger ST1, ST2, ST3, ST4, ST5 und ST6 an die benachbarten Basisstationen $BS_1$, $BS_2$ und $BS_3$ ist nur ein Beispiel. Weitere Varianten hierfür sind denkbar und können je nach Anwendungsfall eingesetzt werden. Weiterhin kann die Art der Zuteilung auch mit der Zeit variieren. So könnte z.B. in einem ersten OFDM Rahmen OFDM frame die in Figur 2 dargestellte Zuteilung erfolgen und im folgenden OFDM Rahmen OFDM frame die Zuteilung um einen Sub-Träger versetzt durchgeführt werden, so dass im Laufe der Zeit eine Rotation der für den Broadcast BCH zugeteilten Sub-Träger ST1, ST2, ST3, ST4, ST5 und ST6 stattfindet.

Durch die Dimensionierung eines OFDM Systems sind benachbarte Sub-Träger korreliert. Ist ein Sub-Träger durch Mehrwegeausbreitung stark gedämpft, betrifft dies meist eine Gruppe von benachbarten Sub-Trägern. Es ist jedoch möglich, dass die restlichen Sub-Träger nur wenig gedämpft sind. Legt man deshalb für die Broadcast Informationen nur eine zusammenhängende Gruppe von benachbarten Sub-Trägern zugrunde, so ist eine objektive Einschätzung der Kanalgüte aufgrund von Amplitudenmessungen nur eingeschränkt möglich. Mit dem oben beschriebenen Vorgehen verteilen sich die Stützwerte zur Bestimmung der Kanalgüte auf die gesamte Bandbreite des Frequenzbandes , wodurch sicher gestellt wird, dass die Genauigkeit der Schätzung der Kanalgüte erhöht wird.

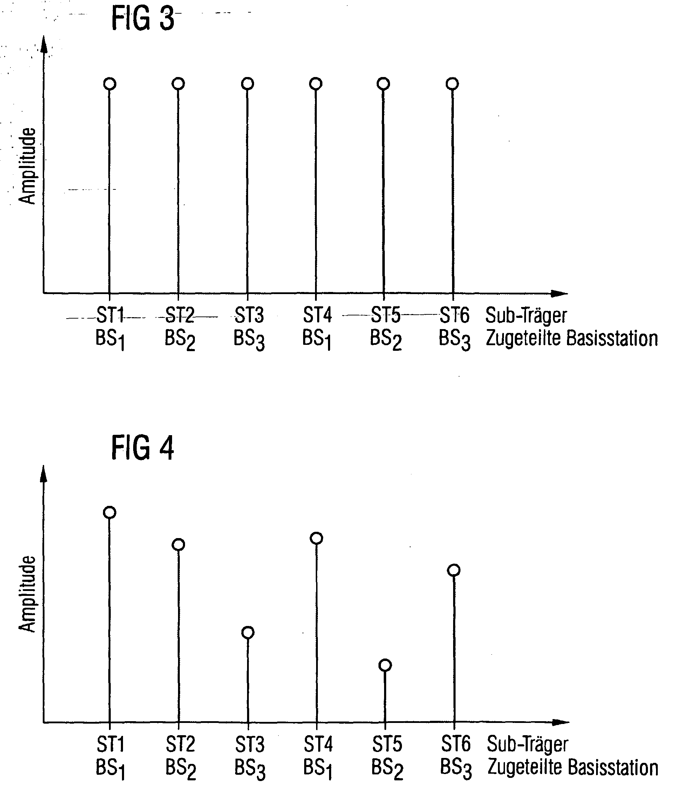

Um die Schätzung der Kanalgüte effektiv durchführen zu können, müssen die Basisstationen auf jedem Sub-Träger mit einer festen, den Teilnehmerstationen bekannten, Amplitude senden. In Figur 3 ist die Amplitude der von den verschiedenen Basisstationen $BS_1$, $BS_2$ und $BS_3$ gesendeten Broadcast Signale dargestellt. Gemäß der in Figur 2 dargestellten Zuteilung der Sub-Träger ST1, ST2, ST3, ST4, ST5 und ST6 an die drei Basisstationen $BS_1$, $BS_2$ und $BS_3$ entspricht die erste Amplitude der von der ersten Basisstation $BS_1$ auf dem ersten Sub-Träger ST1 verwendeten Amplitude, die zweite Amplitude der von der zweiten Basisstation $BS_2$ auf dem zweiten Sub-Träger ST2 verwendeten, usw. Durch Mehrwegeausbreitung und Abschattung empfängt eine Teilnehmerstation z.B. ein Signal, dessen Amplitude in Figur 4 dargestellt ist. Die Amplituden der einzelnen Sub-Träger ST1, ST2, ST3, ST4, ST5 und ST6 variieren dabei entsprechend der Frequenzabhängigkeit der Dämpfung. Durch eine einfache Mittelwertbildung kann eine Metrik gebildet werden, aufgrund derer die Entscheidung für einen Handover abgeleitet werden kann. Hierzu werden z.B. die Amplituden aller Broadcast Signale einer Basisstation summiert und diese Summe durch die Anzahl der von dieser Basisstation zur Broadcast Übertragung verwendeten Sub-Träger dividiert.

Das Verfahren kann auch dann mit Vorteil eingesetzt werden, wenn ein Subträger für die Broadcast Übertragung mehreren Funkzellen zugeteilt wird. In diesem Fall kann dann die Separierung der Signale der einzelnen Basisstationen z.B. durch einen spezifischen Code erfolgen.

Insgesamt wurde durch das Bereitstellen der für die Handover -Entscheidung notwendigen Informationen in einem einzigen OFDM Symbol der Signalisierungsaufwand reduziert. Dies dient als Grundlage zur Reduzierung von Interferenzen und zur Ermöglichung einer hohen spektralen Effizienz.

**Patentansprüche**

1. Verfahren zur Verwaltung von Funkressourcen in einem zellularen als Mehrträgersystem ausgestalteten Funkkommunikationssystem, wobei

   - Informationen auf mindestens einem Frequenzband übertragen werden,
   - das mindestens eine Frequenzband eine Mehrzahl von Sub-Trägern (ST1,- ST2, ST3, ST4, ST5, ST6) aufweist;
   **dadurch gekennzeichnet,**
   - **dass** zeitweilig die Sub-Träger (ST1, ST2, ST3, ST4, ST5, ST6) des mindestens einen Frequenzbandes jeder Funkzelle zur Übertragung von Informationen zur Verfügung stehen, und
   - **dass** die Mehrzahl von Sub-Trägern (ST1, ST2, ST3, ST4, ST5, ST6) des mindestens einen Frequenzbandes zeitweilig einer mindestens zwei Funkzellen umfassenden Anzahl von Funkzellen derartig zugeteilt wird, dass jeder der zugeteilten Sub-Träger (ST1, ST2, ST3, ST4, ST5, ST6) einer Teilmenge aus der Anzahl von Funkzellen zur Übertragung von Informationen zur Verfügung steht.

2. Verfahren nach Anspruch 1, **dadurch gekennzeichnet, dass** mindestens einer der zugeteilten Sub-Träger (ST1, ST2, ST3, ST4, ST5, ST6) genau einer Funkzelle aus der Anzahl von Funkzellen zur Verfügung steht.

3. Verfahren nach Anspruch 1 oder 2, **dadurch gekennzeichnet, dass** jeder der zugeteilten Sub-Träger (ST1, ST2, ST3, ST4, ST5, ST6) genau einer Funkzelle aus der Anzahl von Funkzellen zur Verfügung steht.

4. Verfahren nach einem der Ansprüche 1 bis 3, **dadurch gekennzeichnet , dass** die Anzahl von Funkzellen aus einer Anzahl an benachbarten Funkzellen besteht.

5. Verfahren nach einem der Ansprüche 1 bis 4, **dadurch gekennzeichnet, dass** bei einer Zuteilung der Subträger (ST1, ST2, ST3, ST4, ST5, ST6) an n Funkzellen mindestens einer Funkzelle zur Verfügung stehende SubTräger (ST1, ST2, ST3, ST4, ST5, ST6) einen Frequenzabstand von n Sub-Trägern (ST1, ST2, ST3, ST4, ST5, ST6) aufweisen.

6. Verfahren nach einem der Ansprüche 1 bis 5, **dadurch gekennzeichnet , dass** bei der Zuteilung der Sub-Träger (ST1, ST2, ST3, ST4, ST5, ST6) mindestens einer Funkzelle zur Verfügung stehende Sub-Träger (ST1, ST2, ST3, ST4, ST5, ST6) im Frequenzband benachbarte Sub-Tragen (ST1, ST2, ST3, ST4, ST5, ST6) sind.

7. Verfahren nach einem der Ansprüche 1 bis 6, **dadurch gekennzeichnet, dass** die Zuteilung der Sub-Träger (ST1, ST2, ST3, ST4, ST5, ST6) nach einem Algorithmus, welcher die Verwendung eines Codes umfasst, erfolgt.

8. Verfahren nach einem der Ansprüche 1 bis 7, **dadurch gekennzeichnet, dass** die zugeteilten Sub-Träger (ST1, ST2, ST3, ST4, ST5, ST6) von den Basisstationen der jeweiligen Funkzellen zur Übertragung von Broadcast Informationen verwendet werden.

9. Verfahren nach Anspruch 8 , **dadurch gekennzeichnet, dass** die Broadcast Informationen zur Entscheidung über Handover herangezogen werden.

10. Verfahren nach Anspruch 8 oder 9, **dadurch gekennzeichnet, dass** in die Broadcast Informationen empfangenden Teilnehmerstationen die Amplituden der Broadcast Informationen bestimmt werden.

11. Verfahren nach Anspruch 10, **dadurch** gekennzeichn e t, dass eine Metrik der Amplituden der von einer Basisstation auf den ihr zur Verfügung stehenden Sub-Trägern (ST1, ST2, ST3, ST4; ST5, ST6) übertragenen Broadcast Informationen ermittelt wird.

12. Verfahren nach einem der Ansprüche 1 bis 11, **dadurch gekennzeichnet, dass** es auf ein OFDM System angewandt wird.

13. Funkkommunikationssystem mit zellularem-Aufbau, welches als Mehrträgersystem ausgestaltet ist,

 - umfassend mindestens zwei Funkzellen und mindestens eine netzseitige Steuereinrichtung,
 - mit mindestens einem Frequenzband, welches eine Mehrzahl von Sub-Trägern (ST1, ST2, ST3, ST4, ST5, ST6) zur Übertragung von Informationen in den Funkzellen aufweist,

**dadurch gekennzeichnet,**

 - **dass** die mindestens eine netzseitige Steuereinrichtung Mittel zum zeitweiligen derartigen Zuteilen der Mehrzahl von Sub-Trägern (ST1, ST2, ST3, ST4, ST5, ST6) des mindestens einen Frequenzbandes an die Funkzellen, dass die Sub-Träger (ST1, ST2, ST3, ST4, ST5, ST6) jeder Funkzelle zur Übertragung von Informationen zur Verfügung stehen, aufweist, und
 - **dass** die mindestens netzseitige Steuereinrichtung Mittel zum zeitweiligen derartigen Zuteilen der Mehrzahl von Sub-Trägern (ST1, ST2, ST3, ST4, ST5, ST6) des mindestens einen Frequenzbandes unter eine mindestens zwei Funkzellen umfassende Anzahl von Funkzellen, dass jeder der zugeteilten Sub-Träger (ST1, ST2, ST3, ST4, ST5, ST6) einer Teilmenge aus der Anzahl von Funkzellen zur Übertragung von Informationen zur Verfügung steht, aufweist.

14. Steuereinrichtung für ein Funkkommunikationssystem mit zellularem Aufbau, welches als Mehrträgersystem ausgestaltet ist,

 - umfassend mindestens zwei Funkzellen, mit mindestens einem Frequenzband, welches eine Mehrzahl von Sub-Trägern (ST1, ST2, ST3, ST4, ST5, ST6) zur Übertragung von Informationen in den Funkzellen aufweist,

**dadurch gekennzeichnet,**

 - **dass** sie Mittel zum zeitweiligen derartigen Zuteilen der Mehrzahl von Sub-Trägern (ST1, ST2, ST3, ST4, ST5, ST6) des mindestens einen Frequenzbandes an die Funkzellen, dass die Sub-Träger (ST1, ST2, ST3, ST4, ST5, ST6) jeder Funkzelle zur Übertragung von Informationen zur Verfügung stehen, aufweist, und
 - **dass** sie Mittel zum zeitweiligen derartigen Zuteilen der Mehrzahl von Sub-Trägern (ST1, ST2, ST3, ST4, ST5 , ST6) des mindestens einen Frequenzbandes unter eine mindestens zwei Funkzellen umfassende Anzahl von Funkzellen, dass jeder der zugeteilten Sub-Träger (ST1, ST2, ST3, ST4, ST5, ST6) einer Teilmenge aus der Anzahl von Funkzellen zur Übertragung von Informationen zur Verfügung steht, aufweist.

**Claims**

1. Method for managing radio resources in a cellular radio communications system configured as a multi-carrier system, with

    - information being transmitted on at least one frequency band,
    - the at least one frequency band having several sub-carriers (ST1, ST2, ST3, ST4, ST5, ST6),

    **characterized in that**

    - the sub-carriers (ST1, ST2, ST3, ST4, ST5, ST6) of the at least one frequency band are temporarily available to each radio cell for the transmission of information and
    - the several sub-carriers (ST1, ST2, ST3, ST4, ST5, ST6) of the at least one frequency band are temporarily assigned to a number of radio cells in such a way that each of the assigned sub-carriers (ST1, ST2, ST3, ST4, ST5, ST6) is available to a subset of the number of radio cells for the transmission of information

2. Method in accordance with Claim 1, **characterized in that** at least one of the assigned sub-carriers (ST1, ST2, ST3, ST4, ST5, ST6) is available to exactly one radio cell from the number of radio cells.

3. Method in accordance with Claim 1 or 2, **characterized in that** each of the assigned sub-carriers (ST1, ST2, ST3, ST4, ST5, ST6) is available to exactly one radio cell from the number of radio cells.

4. Method in accordance with one of Claims 1 to 3, **characterized in that** the number of radio cells consists of a number of adjacent radio cells.

5. Method in accordance with one of Claims 1 to 4, **characterized in that** with an assignment of the sub-carriers (ST1, ST2, ST3, ST4, ST5, ST6) to n radio cells, sub-carriers (ST1, ST2, ST3, ST4, ST5, ST6) available to at least one radio cell have a frequency spacing of n sub-carriers (ST1, ST2, ST3, ST4, ST5, ST6).

6. Method in accordance with one of Claims 1 to 5, **characterized in that** with the assignment of the sub-carriers (ST1, ST2, ST3, ST4, ST5, ST6) sub-carriers (ST1, ST2, ST3, ST4, ST5, ST6) available to at least one radio cell are sub-carriers (ST1, ST2, ST3, ST4, ST5, ST6) adjacent in the frequency band.

7. Method in accordance with one of Claims 1 to 6, **characterized in that** the assignment of the sub-carriers (ST1, ST2, ST3, ST4, ST5, ST6) takes place in accordance with an algorithm.

8. Method in accordance with one of Claims 1 to 7, **characterized in that** the assigned sub-carriers (ST1, ST2, ST3, ST4, ST5, ST6) are used by the base stations of the particular radio cells for the transmission of broadcast information.

9. Method in accordance with Claim 8, **characterized in that** the broadcast information is used to decide on handovers.

10. Method in accordance with Claim 8 or 9, **characterized in that** the amplitudes of the broadcast information are determined in the subscriber stations receiving the broadcast information.

11. Method in accordance with Claim 10, **characterized in that** a metric of amplitudes of the broadcast information transmitted from a base station on the sub-carriers (ST1, ST2, ST3, ST4, ST5, ST6) available to it is determined.

12. Method in accordance with one of Claims 1 to 11, **characterized in that** it is used on an OFDM system.

13. Radio communication system of cellular construction, that is configured as a multi-carrier system,

    - including at least two radio cells and at least one control device in the network,
    - with at least one frequency band that has several sub-carriers (ST1, ST2, ST3, ST4, ST5, ST6) for transmission of information in the radio cells,

    **characterized in that**

    - at least one control device in a network has means for the temporary assignment of the several sub-carriers (ST1, ST2, ST3, ST4, ST5, ST6) of the at least one frequency band to the radio cells in such a way that the sub-carriers (ST1, ST2, ST3, ST4, ST5, ST6) are available to each radio cell for the transmission of information, and
    - at least one control device in the network has means for the temporary assignment of the several sub-carriers (ST1, ST2, ST3, ST4, ST5, ST6) of the at least one frequency band among a number of radio cells in such a way that each of the assigned sub-carriers (ST1, ST2, ST3, ST4, ST5, ST6) is available to a subset of the number of radio cells for the transmission of information.

**14.** Control device for a radio communication system of cellular construction, that is configured as a multi-carrier system,

- having at least two radio cells
- with at least one frequency band that has several sub-carriers (ST1, ST2, ST3, ST4, ST5, ST6) for the transmission of information in the radio cells,

**characterized in that**

- it has means for a temporary assignment of the several sub-carriers (ST1, ST2, ST3, ST4, ST5, ST6) of the at least one frequency band to the radio cells in such a way that the sub-carriers (ST1, ST2, ST3, ST4, ST5, ST6) are available to each radio cell for the transmission of information and
- it has means for the temporary assignment of the several sub-carriers (ST1, ST2, ST3, ST4, ST5, ST6) of the at least one frequency band among a number of radio cells in such a way that each of the assigned sub-carriers (ST1, ST2, ST3, ST4, ST5, ST6) is available to a subset of the number of radio cells for the transmission of information.

**Revendications**

**1.** Procédé de gestion de ressources radio dans un système cellulaire de radiocommunication aménagé en tant que système multi-porteuses, dans lequel

- des informations sont transmises sur au moins une bande de fréquences,
- l'au moins une bande de fréquences comporte une pluralité de sous-porteuses (ST1, ST2, ST3, ST4, ST5, ST6), **caractérisé en ce que**
- les sous-porteuses (ST1, ST2, ST3, ST4, ST5, ST6) de l'au moins une bande de fréquences sont temporairement à la disposition de chaque cellule radio aux fins de la transmission d'informations et
- la pluralité de sous-porteuses (ST1, ST2, ST3, ST4, ST5, ST6) de l'au moins une bande de fréquences est attribuée temporairement à un nombre de cellules radio, comprenant au moins deux cellules radio, de manière telle que chacune des sous-porteuses attribuées (ST1, ST2, ST3, ST4, ST5, ST6) soit à la disposition d'un sous-ensemble du nombre de cellules radio aux fins de la transmission d'informations.

**2.** Procédé selon la revendication 1, **caractérisé en ce qu'**au moins l'une des sous-porteuses attribuées (ST1, ST2, ST3, ST4, ST5, ST6) est à la disposition d'exactement une cellule radio du nombre de cellules radio.

**3.** Procédé selon la revendication 1 ou 2, **caractérisé en ce que** chacune des sous-porteuses attribuées (ST1, ST2, ST3, ST4, ST5, ST6) est à la disposition d'exactement une cellule radio du nombre de cellules radio.

**4.** Procédé selon l'une des revendications 1 à 3, **caractérisé en ce que** le nombre de cellules radio se compose d'un nombre de cellules radio voisines.

**5.** Procédé selon l'une des revendications 1 à 4, **caractérisé en ce que**, lors d'une attribution des sous-porteuses (ST1, ST2, ST3, ST4, ST5, ST6) à n cellules radio, des sous-porteuses (ST1, ST2, ST3, ST4, ST5, ST6) à la disposition d'au moins une cellule radio présentent un écart de fréquence de n sous-porteuses (ST1, ST2, ST3, ST4, ST5, ST6).

**6.** Procédé selon l'une des revendications 1 à 5, **caractérisé en ce que**, lors de l'attribution des sous-porteuses (ST1, ST2, ST3, ST4, ST5, ST6), des sous-porteuses (ST1, ST2, ST3, ST4, ST5, ST6) à la disposition d'au moins une cellule radio sont dans la bande de fréquences de sous-porteuses voisines (ST1, ST2, ST3, ST4, ST5, ST6).

**7.** Procédé selon l'une des revendications 1 à 6, **caractérisé en ce que** l'attribution des sous-porteuses (ST1, ST2, ST3, ST4, ST5, ST6) se fait selon un algorithme qui comprend l'utilisation d'un code.

**8.** Procédé selon l'une des revendications 1 à 7, **caractérisé en ce que** les sous-porteuses attribuées (ST1, ST2, ST3, ST4, ST5, ST6) sont utilisées par les stations de base des cellules radio respectives aux fins de la transmission d'informations broadcast.

**9.** Procédé selon la revendication 8, **caractérisé en ce qu'**il est fait appel aux informations broadcast aux fins de la décision de handover.

**10.** Procédé selon la revendication 8 ou 9, **caractérisé en ce que** les amplitudes des informations broadcast sont déterminées dans des stations d'abonnés recevant les informations broadcast.

**11.** Procédé selon la revendication 10, **caractérisé par** la détermination d'une métrique des amplitudes des informations broadcast transmises par une station de base sur les sous-porteuses (ST1, ST2, ST3, ST4, ST5, ST6) qui sont à sa disposition.

**12.** Procédé selon l'une des revendications 1 à 11, **caractérisé en ce qu'**il est appliqué à un système OFDM.

**13.** Système de radiocommunication d'architecture cellulaire aménagé en tant que système multi-porteuses,

- comprenant au moins deux cellules radio et au moins un équipement de commande réseau,
- avec au moins une bande de fréquences qui comporte une pluralité de sous-porteuses (ST1, ST2, ST3, ST4, ST5, ST6) aux fins de la transmission d'informations dans les cellules radio,

**caractérisé en ce que**

- l'au moins un équipement de commande réseau comporte des moyens pour attribuer temporairement la pluralité de sous-porteuses (ST1, ST2, ST3, ST4, ST5, ST6) de l'au moins une bande de fréquences aux cellules radio de manière telle que les sous-porteuses (ST1, ST2, ST3, ST4, ST5, ST6) soient à la disposition de chaque cellule radio aux fins de la transmission d'informations et

- l'au moins un équipement de commande réseau comporte des moyens pour attribuer temporairement la pluralité de sous-porteuses (ST1, ST2, ST3, ST4, ST5, ST6) de l'au moins une bande de fréquences à un nombre de cellules radio comprenant au moins deux cellules radio de manière telle que chacune des sous-porteuses attribuées (ST1, ST2, ST3, ST4, ST5, ST6) soit à la disposition d'un sous-ensemble du nombre de cellule radio aux fins de la transmission d'informations.

**14.** Équipement de commande pour un système de radiocommunication d'architecture cellulaire aménagé en tant que système multi-porteuses,

- comprenant au moins deux cellules radio,
- avec au moins une bande de fréquences qui comporte une pluralité de sous-porteuses (ST1, ST2, ST3, ST4, ST5, ST6) aux fins de la transmission d'informations dans les cellules radio,

**caractérisé en ce que**

- il comporte des moyens pour attribuer temporairement la pluralité de sous-porteuses (ST1, ST2, ST3, ST4, ST5, ST6) de l'au moins une bande de fréquences aux cellules radio de manière telle que les sous-porteuses (ST1, ST2, ST3, ST4, ST5, ST6) soient à la disposition de chaque cellule radio aux fins de la transmission d'informations et

- il comporte des moyens pour attribuer temporairement la pluralité de sous-porteuses (ST1, ST2, ST3, ST4, ST5, ST6) de l'au moins une bande de fréquences à un nombre de cellules radio comprenant au moins deux cellules radio de manière telle que chacune des sous-porteuses attribuées (ST1, ST2, ST3, ST4, ST5, ST6) soit à la disposition d'un sous-ensemble du nombre de cellule radio aux fins de la transmission d'informations.

## FIG 1

## FIG 2

| | | OFDM Frame | | | | |
|---|---|---|---|---|---|---|
| BS$_3$ | | | | | | ST6 |
| BS$_2$ | | | | | | ST5 |
| BS$_1$ | | | | | | ST4 |
| BS$_3$ | | | | | | ST3 |
| BS$_2$ | | | | | | ST2 |
| BS$_1$ | | | | | | ST1 |
| BCH | Control | Traffic | Traffic | Traffic | BCH | |

Sub-Träger

OFDM Symbole

## FIG 3

| | | | | | | |
|---|---|---|---|---|---|---|
| ST1 | ST2 | ST3 | ST4 | ST5 | ST6 | Sub-Träger |
| $BS_1$ | $BS_2$ | $BS_3$ | $BS_1$ | $BS_2$ | $BS_3$ | Zugeteilte Basisstation |

## FIG 4

| | | | | | | |
|---|---|---|---|---|---|---|
| ST1 | ST2 | ST3 | ST4 | ST5 | ST6 | Sub-Träger |
| $BS_1$ | $BS_2$ | $BS_3$ | $BS_1$ | $BS_2$ | $BS_3$ | Zugeteilte Basisstation |